# EUROPEAN PATENT APPLICATION

(11) **EP 2 525 532 A1**
(43) Date of publication of application: **21.11.2012**
(21) Application number: 11194697.6
(22) Date of filing: 20.12.2011
(51) Int. Cl.: H04L 12/46, H04L 12/56, H04L 12/24

(54) **Method and apparatus of connectivity discovery between network switch and server based on vlan identifiers**

(30) Priority: 19.05.2011 US 201113111358
(71) Applicant: Hitachi Ltd., Tokyo 100-8280 (JP)
(72) Inventor: Masood, Abid, Tokyo, 100-8220 (JP); Johnson, Tyrone, Tokyo, 100-8220 (JP); Down, Robert Eugene, Jr., Tokyo, 100-8220 (JP); Kano, Yoshiki, Tokyo, 100-8220 (JP)
(74) Representative: MERH-IP Matias Erny Reichl Hoffmann

(57) **Abstract**

A management computer for managing configuration of servers for connection to a switch comprises a port discovery module to: instruct a target server, for connection to a target switch port, to create a virtual adapter on a virtual switch associated with a physical NIC in the target server; obtain a list of VLAN IDs on all switch ports; select one or more VLAN IDs from the list based on a preset policy; set one such VLAN ID onto the virtual adapter; instruct the target server to manipulate the virtual adapter to send a packet with the set VLAN ID to the target switch port; if the switch accepted the packet sent to the target switch port, update a switch port mapping using the set VLAN ID as a discovered VLAN ID to map the physical NIC associated with the virtual adapter to the target switch port having the discovered VLAN ID.

## Description

### BACKGROUND OF THE INVENTION

The present invention relates generally to methods and apparatus to configure dynamically switches and servers with VLAN (Virtual Local Area Network) in a cloud datacenter.

In a cloud datacenter, there are thousands of different vender's servers and switches. Therefore the network configuration is complex. When a Data Center Administrator (DCA), who has the role of network, server, or storage administration, implements the network cabling and setting network switch and server, it is hard to change the design or implement a new design based on user requirement. In the network, there are several VLANs. The VLAN is implemented on the Ethernet switch and is based on IEEE802.1Q. When the administrator adds a server node to the Ethernet switch, the administrator should configure the VLANs.

As prior art, Japanese Publication Application Number JP2007-243740A discloses a discovery method of VLANs from node to switch port. The invention uses already predetermined virtual network identifier (VLAN ID) in order for node to check availability of VLAN identified by VLAN IDs.

Japanese Publication Application Number JP2007-243740A discloses a discovery method of VLAN IDs in switch port. That invention uses already predetermined virtual network identifiers (VLAN IDs) in order to a node to check the availability of VLAN identified by the VLAN IDs. As a worst case scenario, the node needs to use the entire range of VLAN IDs (e.g., 0-4091). The result is that administrator needs to wait a long time for the discovery. The DCA wants an efficient way of network configuration without the manual process of configuration and the testing when adding a server to the cloud data center's network.

U.S. Patent Number 7,796,613 discloses a detection method of mismatched VLAN IDs on a device's port. That invention checks if a particular VLAN ID can be accessible to a target port from another device. If another device sends a packet without VLAN ID and with wrong VLANs unintentionally to the one device, the device sends an error message to the user. However, the patent does not discuss any mapping about discovering a network adapter of a host and a port on switch, and then setting new VLANs.

### BRIEF SUMMARY OF THE INVENTION

Exemplary embodiments of the invention provide methods and systems that enable to determine if a network adapter of a host is connected to a switch. The system includes a server host, a host connected switch, and a management server for server and switch. Each switch periodically updates a Machine Address Control (MAC) address table (in the switch) which contains the mapping between the switch port of a switch and the MAC address of the network adapter of the host connected to the switch. The switch keeps the relationship updated, for a specific port, only if traffic is allowed to flow through the switch port. If the switch port is tagged with VLAN numbers (VLAN ID) based on IEEE802.1Q, no traffic is allowed to flow unless the traffic is tagged with one of the VLAN numbers of the switch port. As a consequence, one cannot determine mapping between switch port and network adapter of a host.

In specific embodiments, the method allows determining the missing mapping between switch port and MAC address, by forcing a traffic flow from each network adapter with selected VLANs from a list of selected VLANs and then query the MAC-address table from the IEEE802.1Q compliant switch on the management server. Moreover, the method introduces the concept of setting VLAN IDs for discovered mapping after the discovery in order to establish communication among the MAC addresses on a group of hosts/servers which are on the VLANs. Using a management server which can communicate with the switch and server, this invention can archive discovery of a mapping between the NIC (Network Interface Card) of server and the port on switch and set a new VLAN to communicate with a server group. Furthermore, the DCA in a large data center can automate the discovery of mapping between the management server's NIC and the switch port, efficiently.

In accordance with an aspect of the present invention, a management computer for managing configuration of a plurality of servers for connection to a switch comprises a processor, a memory, and a port discovery module. The port discovery module is configured to: (i) instruct a target server of the plurality of servers, to be connected to a target switch port of the switch, to create a virtual adapter on a virtual switch associated with a physical NIC (Network Interface Card) in the target server; (ii) obtain a list of VLAN IDs (Virtual Local Area Network Identifiers) on all switch ports of the switch; (iii) select one or more VLAN IDs from the list based on a preset policy; (iv) set one VLAN ID from the selected one or more VLAN IDs onto the virtual adapter; (v) instruct the target server to manipulate the virtual adapter so as to send a packet with the set VLAN ID from the target server to the target switch port of the switch; (vi) obtain a server MAC (Machine Address Control) address table for all switch ports of the switch, the server MAC address table providing information on physical NICs and corresponding MAC addresses for each server connected to the switch; (vii) if the switch accepted the packet sent to the target switch port based on the set VLAN ID to the target switch port and an updated MAC address for the target switch port in a port configuration table of the switch, the port configuration table including a MAC address list of MAC address and corresponding VLAN IDs for each switch port on the switch, the updated MAC address being one of the MAC addresses on the MAC address list for the target switch port, then update a switch port mapping using the updated MAC address and the target switch port to map the physical NIC associated with the virtual adapter of the target server to the target switch port having the discovered VLAN ID; (viii) if the switch did not accept the packet sent to the target switch port, and if the packet's MAC address of the target server's NIC is on the port configuration table of the switch, then set a next VLAN ID onto the virtual adapter and instruct the target server to manipulate the virtual adapter so as to send a packet with the set next VLAN ID from the target server to the target switch port of the switch; and (ix) repeat (vi) to (viii) until the packet's MAC address of the target server's NIC is accepted by the switch based on the discovered VLAN ID or there is no more next VLAN ID on the list.

In some embodiments, updating the switch port mapping may comprise updating a switch port mapping table which may include server name of each server connected to the switch, physical NIC name of each physical NIC of the server connected to the switch, switch port number of the switch port connected to the physical NIC, and/or switch VLAN IDs of the switch port connected to the physical NIC. The one or more VLAN IDs may be selected from the list based on one or more of the following preset policies: (1) selecting all VLAN IDs on the switch; (2) selecting VLAN IDs on only active ports of the switch which are connected to the servers; and (3) selecting one VLAN ID on any of active ports of the switch which are connected to the servers. The port discovery module may be configured, if the switch did not accept the packet sent to the target switch port, and if there is no more next VLAN ID on the list, then send an error message to indicate that there is no discovered VLAN ID.

In specific embodiments, the port discovery module may be configured, if the switch accepted the packet sent to the target switch port so as to produce a discovered VLAN ID, to add the target server to a connection group of servers, which may comprise selecting one or more VLAN IDs for the connection group; and/or assigning the selected VLAN IDs to the target switch port which is connected to the physical NIC in the target server. The port discovery module may be configured to update a connection group table using the VLAN IDs assigned to the target switch port connected to the physical NIC in the target server with the corresponding MAC address, the connection group table preferably including, for each connection group, the servers in the connection group, the corresponding server MAC address of the physical NIC, the assigned VLAN IDs, and whether the connection group is for connection to an external network or not. Selecting one or more VLAN IDs for the connection group may comprise: if the connection group is for connection to an external network, then requesting an administrator to select one or more external VLAN IDs for the connection group from the connection group table; if the connection group is not for connection to an external network and selection is not automatic, then requesting an administrator to select one or more internal VLAN IDs for the connection group from the connection group table; and/or if the connection group is not for connection to an external network and selection is automatic, then automatically selecting one or more internal VLAN IDs for the connection group from the connection group table.

In accordance with another aspect of the invention, an information system may comprise a switch; a plurality of servers; and a management computer to manage configuration of the plurality of servers for connection to the switch, the management computer including a processor, a memory, and a port discovery module. A target server of the plurality of servers, which is to be connected to a target switch port of the switch, may be configured to create a virtual adapter on a virtual switch associated with a physical NIC (Network Interface Card) in the target server. The port discovery module may be configured to obtain a list of VLAN IDs (Virtual Local Area Network Identifiers) on all switch ports of the switch, select one or more VLAN IDs from the list based on a preset policy, and set one VLAN ID from the selected one or more VLAN IDs onto the virtual adapter. The target server may be configured to manipulate the virtual adapter so as to send a packet with the set VLAN ID from the target server to the target switch port of the switch. The port discovery module may be configured to (a) obtain a server MAC (Machine Address Control) address table for all switch ports of the switch, the server MAC address table providing information on physical NICs and corresponding MAC addresses for each server connected to the switch; (b) if the switch accepted the packet sent to the target switch port based on the set VLAN ID to the target switch port and an updated MAC address for the target switch port in a port configuration table of the switch, the port configuration table including a MAC address list of MAC address and corresponding VLAN IDs for each switch port on the switch, the updated MAC address being one of the MAC addresses on the MAC address list for the target switch port, then update a switch port mapping using the updated MAC address and the target switch port to map the physical NIC associated with the virtual adapter of the target server to the target switch port having the discovered VLAN ID; (c) if the switch did not accept the packet sent to the target switch port, and if the packet's MAC address of the target server's NIC is on the port configuration table of the switch, then set a next VLAN ID onto the virtual adapter and instruct the target server to manipulate the virtual adapter so as to send a packet with the set next VLAN ID from the target server to the target switch port of the switch; and/or (d) repeat (a) to (c) until the packet's MAC address of the target server's NIC is accepted by the switch based on the discovered VLAN ID or there is no more next VLAN ID on the list.
According to preferred embodiments of the above aspect, the one or more VLAN IDs may be selected from the list based on one or more of the following preset policies:
(1) selecting all VLAN IDs on the switch; (2) selecting VLAN IDs on only active ports of the switch which are connected to the servers; and/or (3) selecting one VLAN ID on any of active ports of the switch which are connected to the servers.
The port discovery module may be configured, if the switch did not accept the packet sent to the target switch port, and if there is no more next VLAN ID on the list, then send an error message to indicate that there is no discovered VLAN ID.
The port discovery module may also or alternatively be configured, if the switch accepted the packet sent to the target switch port so as to produce a discovered VLAN ID, to add the target server to a connection group of servers, which comprises: selecting one or more VLAN IDs for the connection group; and/or assigning the selected VLAN IDs to the target switch port which is connected to the physical NIC in the target server.
The port discovery module may also be configured to update a connection group table using the VLAN IDs assigned to the target switch port connected to the physical NIC in the target server with the corresponding MAC address, the connection group table including, for each connection group, the servers in the connection group, the corresponding server MAC address of the physical NIC, the assigned VLAN IDs, and/or whether the connection group is for connection to an external network or not.
Selecting one or more VLAN IDs for the connection group may comprise: if the connection group is for connection to an external network, then requesting an administrator to select one or more external VLAN IDs for the connection group from the connection group table; if the connection group is not for connection to an external network and selection is not automatic, then requesting an administrator to select one or more internal VLAN IDs for the connection group from the connection group table; and/or if the connection group is not for connection to an external network and selection is automatic, then automatically selecting one or more internal VLAN IDs for the connection group from the connection group table.

In accordance with another aspect of this invention, a method for managing configuration of a plurality of servers for connection to a switch comprises: (i) instructing a target server of the plurality of servers, to be connected to a target switch port of the switch, to create a virtual adapter on a virtual switch associated with a physical NIC (Network Interface Card) in the target server; (ii) obtaining a list of VLAN IDs (Virtual Local Area Network Identifiers) on all switch ports of the switch; (iii) selecting one or more VLAN IDs from the list based on a preset policy; (iv) setting one VLAN ID from the selected one or more VLAN IDs onto the virtual adapter; (v) instructing the target server to manipulate the virtual adapter so as to send a packet with the set VLAN ID from the target server to the target switch port of the switch; (vi) obtaining a server MAC (Machine Address Control) address table for all switch ports of the switch, the server MAC address table providing information on physical NICs and corresponding MAC addresses for each server connected to the switch; (vii) if the switch accepted the packet sent to the target switch port based on the set VLAN ID to the target switch port and an updated MAC address for the target switch port in a port configuration table of the switch, the port configuration table including a MAC address list of MAC address and corresponding VLAN IDs for each switch port on the switch, the updated MAC address being one of the MAC addresses on the MAC address list for the target switch port, then updating a switch port mapping using the updated MAC address and the target switch port to map the physical NIC associated with the virtual adapter of the target server to the target switch port having the discovered VLAN ID; (viii) if the switch did not accept the packet sent to the target switch port, and if the packet's MAC address of the target server's NIC is on the port configuration table of the switch, then setting a next VLAN ID onto the virtual adapter and instruct the target server to manipulate the virtual adapter so as to send a packet with the set next VLAN ID from the target server to the target switch port of the switch; and (ix) repeating (vi) to (viii) until the packet's MAC address of the target server's NIC is accepted by the switch based on the discovered VLAN ID or there is no more next VLAN ID on the list.
According to preferred embodiments of the above aspect, updating the switch port mapping may comprise updating a switch port mapping table which includes server name of each server connected to the switch, physical NIC name of each physical NIC of the server connected to the switch, switch port number of the switch port connected to the physical NIC, and/or switch VLAN IDs of the switch port connected to the physical NIC.
The one or more VLAN IDs may be selected from the list based on one of the following preset policies: (1) selecting all VLAN IDs on the switch; (2) selecting VLAN IDs on only active ports of the switch which are connected to the servers; and/or (3) selecting one VLAN ID on any of active ports of the switch which are connected to the servers.
The method may further comprise: if the switch did not accept the packet sent to the target switch port, and if there is no more next VLAN ID on the list, then sending an error message to indicate that there is no discovered VLAN ID.
The method may further comprise: if the switch accepted the packet sent to the target switch port so as to produce a discovered VLAN ID, adding the target server to a connection group of servers, which includes: selecting one or more VLAN IDs for the connection group; and/or assigning the selected VLAN IDs to the target switch port which is connected to the physical NIC in the target server.
The method may further comprise: updating a connection group table using the VLAN IDs assigned to the target switch port connected to the physical NIC in the target server with the corresponding MAC address, the connection group table including, for each connection group, the servers in the connection group, the corresponding server MAC address of the physical NIC, the assigned VLAN IDs, and/or whether the connection group is for connection to an external network or not.
Selecting one or more VLAN IDs for the connection group may comprise: if the connection group is for connection to an external network, then requesting an administrator to select one or more external VLAN IDs for the connection group from the connection group table; if the connection group is not for connection to an external network and selection is not automatic, then requesting an administrator to select one or more internal VLAN IDs for the connection group from the connection group table; and/or if the connection group is not for connection to an external network and selection is automatic, then automatically selecting one or more internal VLAN IDs for the connection group from the connection group table.

These and other features and advantages of the present invention will become apparent to those of ordinary skill in the art in view of the following detailed description of the specific embodiments.

### BRIEF DESCRIPTION OF THE DRAWINGS

FIG. 1 illustrates an example of a hardware configuration of an information system in which the method and apparatus of the invention may be applied.

FIG. 2 illustrates an example of a logical configuration of the invention applied to the architecture of FIG. 1.

FIG. 3 shows an example of a Port Configuration Table for port configuration on the switch.

FIG. 4 shows an example of a Server MAC Address Table for the server's NIC MAC address on the management server.

FIG. 5 shows an example of a Discovered Server Connection Table for discovered MAC and VLAN ID for each port in the switch.

FIG. 6 shows an example of a Switch Port Mapping Table among servers, ports, and VLANs.

FIG. 7 shows an example of a VLAN IDs Pool Table.

FIG. 8 shows an example of a Connection Group Table for connection group on the switch's port for the servers.

FIG. 9 shows an example of a Sorted VLAN IDs Table.

FIG. 10 shows an example of a frame format of Ethernet to access the VLAN network.

FIG. 11 shows an example of a flow diagram of a server addition operation procedure.

FIG. 12 shows an example of a flow diagram illustrating a pre-step check on port discovery if there is a need for port discovery.

FIG. 13 shows an example of a flow diagram illustrating a main port discovery process for the discovery of ports executed on the port discovery module of the management server.

FIG. 14 shows an example of a flow diagram illustrating a process of assigning VLAN IDs on the switch's port discovered by executing the port discovery module of the management server.

FIG. 15 shows an example of a flow diagram illustrating a process of selecting VLAN IDs as specified under in step 1402 of FIG. 14.

FIG. 16 illustrates an example of a procedure to assign VLAN IDs on a switch port.

FIG. 17 shows a logical configuration of re-discovery of a mapping between a server's MAC and a switch port in case of failure of sending a packet.

FIG. 18 shows an example of a flow diagram illustrating a process of selecting VLAN IDs on a connection group for setting the VLAN IDs automatically in step 1505 of FIG. 14.

FIG. 19 shows an example of a flow diagram illustrating a process of setting VLAN IDs to each VM on creation of the VM.

FIG. 20 shows an example of a system configuration illustrating the allocation of a VLAN ID to each VM after adding a server to a connection group.

### DETAILED DESCRIPTION OF THE INVENTION

In the following detailed description of the invention, reference is made to the accompanying drawings which form a part of the disclosure, and in which are shown by way of illustration, and not of limitation, exemplary embodiments by which the invention may be practiced. In the drawings, like numerals describe substantially similar components throughout the several views. Further, it should be noted that while the detailed description provides various exemplary embodiments, as described below and as illustrated in the drawings, the present invention is not limited to the embodiments described and illustrated herein, but can extend to other embodiments, as would be known or as would become known to those skilled in the art. Reference in the specification to "one embodiment," "this embodiment," or "these embodiments" means that a particular feature, structure, or characteristic described in connection with the embodiment is included in at least one embodiment of the invention, and the appearances of these phrases in various places in the specification are not necessarily all referring to the same embodiment. Additionally, in the following detailed description, numerous specific details are set forth in order to provide a thorough understanding of the present invention. However, it will be apparent to one of ordinary skill in the art that these specific details may not all be needed to practice the present invention. In other circumstances, well-known structures, materials, circuits, processes and interfaces have not been described in detail, and/or may be illustrated in block diagram form, so as to not unnecessarily obscure the present invention.

Furthermore, some portions of the detailed description that follow are presented in terms of algorithms and symbolic representations of operations within a computer. These algorithmic descriptions and symbolic representations are the means used by those skilled in the data processing arts to most effectively convey the essence of their innovations to others skilled in the art. An algorithm is a series of defined steps leading to a desired end state or result. In the present invention, the steps carried out require physical manipulations of tangible quantities for achieving a tangible result. Usually, though not necessarily, these quantities take the form of electrical or magnetic signals or instructions capable of being stored, transferred, combined, compared, and otherwise manipulated. It has proven convenient at times, principally for reasons of common usage, to refer to these signals as bits, values, elements, symbols, characters, terms, numbers, instructions, or the like. It should be borne in mind, however, that all of these and similar terms are to be associated with the appropriate physical quantities and are merely convenient labels applied to these quantities. Unless specifically stated otherwise, as apparent from the following discussion, it is appreciated that throughout the description, discussions utilizing terms such as "processing," "computing," "calculating," "determining," "displaying," or the like, can include the actions and processes of a computer system or other information processing device that manipulates and transforms data represented as physical (electronic) quantities within the computer system's registers and memories into other data similarly represented as physical quantities within the computer system's memories or registers or other information storage, transmission or display devices.

The present invention also relates to an apparatus for performing the operations herein. This apparatus may be specially constructed for the required purposes, or it may include one or more general-purpose computers selectively activated or reconfigured by one or more computer programs. Such computer programs may be stored in a computer-readable storage medium, such as, but not limited to optical disks, magnetic disks, read-only memories, random access memories, solid state devices and drives, or any other types of media suitable for storing electronic information. The algorithms and displays presented herein are not inherently related to any particular computer or other apparatus. Various general-purpose systems may be used with programs and modules in accordance with the teachings herein, or it may prove convenient to construct a more specialized apparatus to perform desired method steps. In addition, the present invention is not described with reference to any particular programming language. It will be appreciated that a variety of programming languages may be used to implement the teachings of the invention as described herein. The instructions of the programming language(s) may be executed by one or more processing devices, e.g., central processing units (CPUs), processors, or controllers.

Exemplary embodiments of the invention, as will be described in greater detail below, provide apparatuses, methods and computer programs for configuring dynamically switches and servers with VLAN in a cloud datacenter.

According to exemplary embodiments, a management server 100 finds the port of an IEEE802.1Q compliant Ethernet switch 200 and a server's NIC (Network Interface Card) mapping issued by the VLAN ID tagged Ethernet packet to the switch, wherein within the switch are already known switch trunk tags with (i.e., acceptable VLAN tags). The benefits of the invention include efficient discovery of VLAN tags and setting a user specified VLAN ID which is not used on the switch's discovered port to make a connection group for the server. The following describes the system components including configurations first, then the process flow diagrams to show behaviors based on the component, and lastly the overall working of the system.

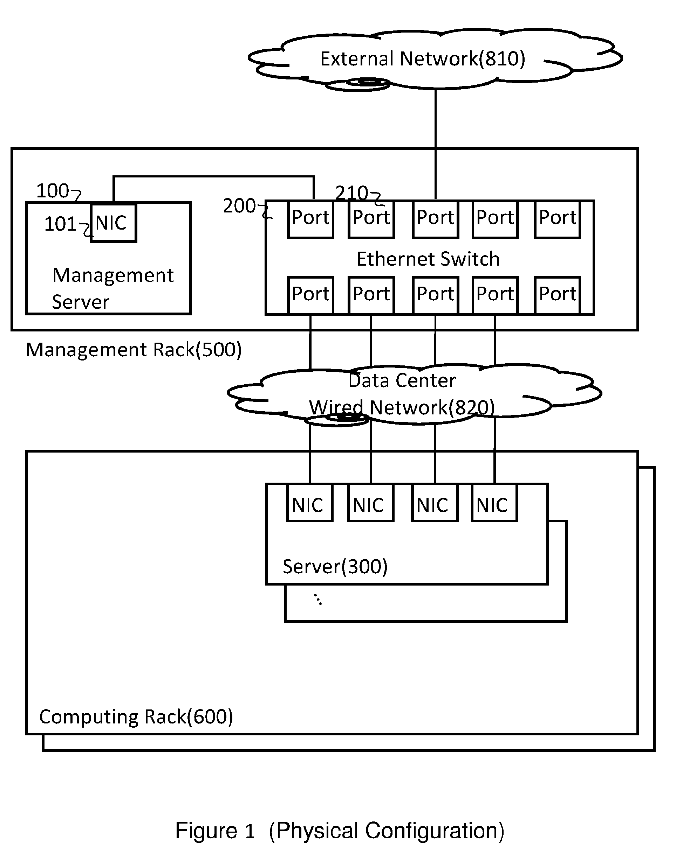

FIG. 1 illustrates an example of a hardware configuration of an information system in which the method and apparatus of the invention may be applied. The system includes a management server 100, at least one switch 200 which is an IEEE802.1Q compliant Ethernet switch in a specific embodiment, and legacy servers 300 (also referred to as hosts). The management server 100 and server 300 may be PC servers each of which includes a CPU, a memory, disk(s), and NIC (Network Interface Card) 101. The NIC has a unique MAC (Media Access Control) address to be accessible as a port. The Ethernet switch 200 includes a pocket processing processor, ports 210, and a memory, and it provides connection among the ports 210 using VLAN ID based on IEEE802.1Q. No traffic is allowed to flow unless the traffic is tagged with one of the VLAN IDs of the switch port 210. The switch 200 periodically updates a MAC address table on each of the ports which can be used to find which server's MAC address is accessed. The management server 100 and switch 200 are located in a management rack 500. The servers 300 are located in a computing rack 600. The DCA may use several computing racks 600 to expand the computing power. Regarding connections, the management server 100 and the servers 300 connect to the Ethernet switch 200 via Ethernet capper cables or Fibres which are compliant with IEEE 802.3ab, z or some other kind of Ethernet frame transferable standard. Further, the Ethernet can be connected to an external network 810 such as the Internet or Intranet within a company network via Ethernet. The Ethernet switch 200 connects to the servers 300 via a data center wired network 820, which includes VLAN ID's Ethernet packet passable cable and may connect some switch, hub, or the like to be bridge cable. This network is point-to-point network which is Port and NIC direct connectivity.

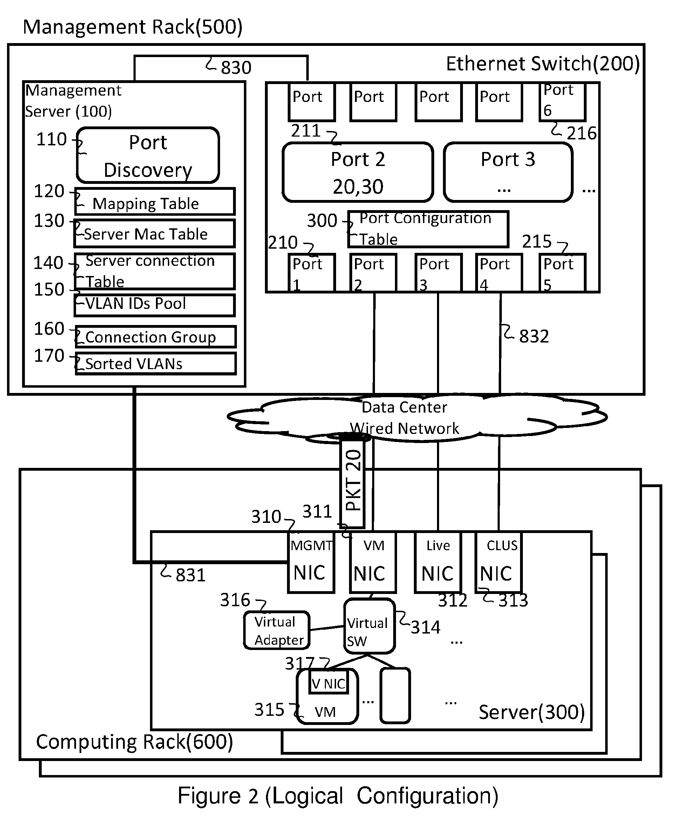

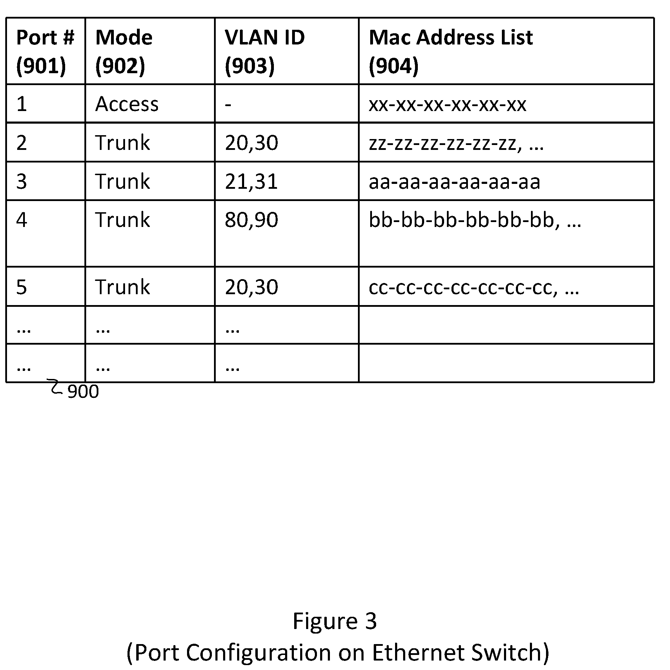

FIG. 2 illustrates an example of a logical configuration of the invention applied to the architecture of FIG. 1. One main component is a port discovery module 110 in the management server 100. To enable this invention, the port discovery 110 uses the management server's NIC 101, switch port mapping table 120, MAC address table 130, discovered server connection table 140 (based on the port configuration table 900 of FIG. 3), VLAN IDs pool table 150, connection group table 160, and sorted VLAN IDs table 170. The details of the tables are discussed below.

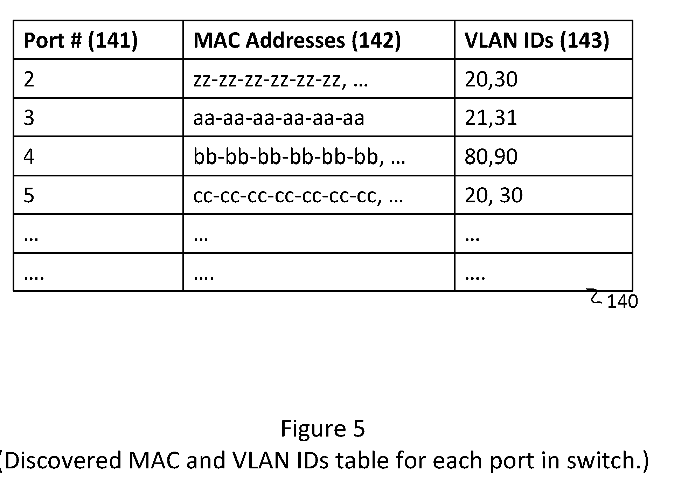

In the Ethernet switch 200, there is a server connection table 140 which has columns of port number, VLANs on the port, and discovered MAC address on the port (see FIG. 5). The DCA may set the mode for each port 210 on the switch. Regarding modes, there are three types of modes. The first type is the default mode. Under this mode, any packet can pass through any of the ports and is set by most of venders as default. The second type is the access mode. Under this mode, any packet can pass through DCA-specified ports by Network ID within the switch. For example, Port 100 has 1 as network ID within a switch and Port 101 has 1 as network ID. In this case, if a packet regardless of VLAN ID is received in port 1, the switch transfers the packet to Port 101. In most case, the DCA uses the access mode for connection of an end node. The third type is the trunk mode, which is defined in 802.1Q VLAN specification and is set with multiple VLAN IDs on a port to route an Ethernet packet, which has a packet with VLAN ID, to other ports 210 based on the VLAN ID on the Ethernet packet. For example, a server sends a packet with VLAN ID 1 to Port 100, which is set by VLAN ID 10 in order to route the packet using VLAN ID on port, and the switch receives the packet based on the VLAN ID on the port and looks for the same VLAN ID on other ports in the switch to transfer the packet. The use of the trunk mode is for trunk links that connect to some other switch such as a Virtual Switch for a virtual machine server in the server 300 or an Ethernet switch. Embodiments of this invention configure the servers as virtual machine runnable servers 300. Therefore, one should set the trunk mode on the server connected ports. Consequently, one sets the trunk mode instead of the access mode on the port because the access port cannot route a VLAN packet to other ports. As an example of setting mode, when one sets 20, 30, 40 as VLAN IDs on port 1 (211), 20 as a VLAN ID on port 5 (215), and 30 on port 6 (216) as a VLAN ID by trunk mode in switch, the switch 200 sends port 1's packet with VLAN ID 20 to port 5 and sends port 1's packet with VLAN ID 30 to port 6.

In a server 300, there are several NICs. In the embodiment shown in FIG. 2, there are four different NICs. The first NIC 310 is for Management (MGMT) Network. The second NIC 311 is for Virtual Machine (VM) Network. The third NIC 312 is for Migration (Live). The fourth NIC 313 is for Cluster (CLUS) Management Network. Each NIC has a MAC address to communicate with any other NIC or port on switch. The NIC is connected to the virtual switch 314 (shown as virtual SW), which is connected to a virtual adapter 316 and the virtual NIC 317 of each of one or more virtual machines 315 (shown as VM). The virtual adapter 316 can send a packet with a VLAN ID by enabling the adapter. In this embodiment, we use this virtual adapter 316 to discover a mapping between the switch's port and the server's MAC address. The virtual NIC is for the virtual machine's network interfaces to communicate with another virtual machine.

Regarding logical connections, there are three major connections. The first connection 830 is between the management server 100 and Ethernet switch 200 to get port configuration and discovered MAC address on a port from the switch using SSH (Secure Shell) or telnet. The second connection 831 is between the management server 100 and server 300 to get the NIC's Mac address and request the server to issue a packet with VLANs in order to discover accessible VLAN IDs. The third network 832 is between the switch 200 and server 300.

FIG. 3 shows an example of a Port Configuration Table 900 for port configuration on the switch 200. The Port Configuration Table 900 has columns of port number 901 in the switch 200, port's mode 902 which is selectable as access or trunk, VLAN IDs 903 on the port, and MAC list 904. The MAC list 904 is a list of MAC addresses that can be constructed when the switch receives a packet with accessible VLANs that are identified by the VLAN IDs 903. Using the information set in this table 900, the switch 200 routes packets based on VLAN IDs.

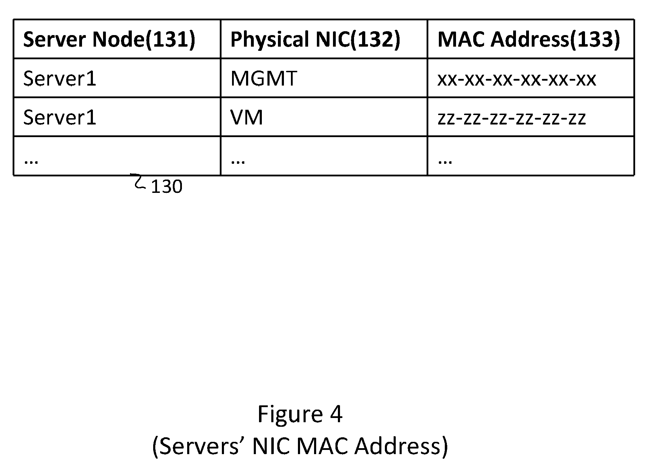

FIG. 4 shows an example of a Server MAC Address Table 130 for the server's NIC MAC address on the management server 100. The table 130 has columns of server node 131, physical NIC's name 132, and MAC address on NIC 133. The physical NIC's name may be set by a user to identify the role of the NIC 101. As discussed above, the switch 200 periodically updates the MAC address table 130 on each port and the table information is collected from the server 300.

FIG. 5 shows an example of a Discovered Server Connection Table 140 for discovered MAC and VLAN ID for each port in the switch 200. The table 140 includes columns of port number 141 in the switch 200, MAC addresses 142 which are used on discovery from the server 300, and VLAN IDs 143. The switch 200 updates and stores MAC address 142 on each port if there is arrival of an Ethernet packet with VLAN ID 143. The port discovery 110 of the management server 100 constructs this table 140 after it finds that the switch 200 has MAC address 904 on a port 901 of the Port Configuration Table 900 of FIG. 3. The switch 200 receives a packet with accessible VLAN which is defined by the MAC address column 904 on a port 901. The details are discussed below. This table 140 can be stored in the switch 200 and the management server 100.

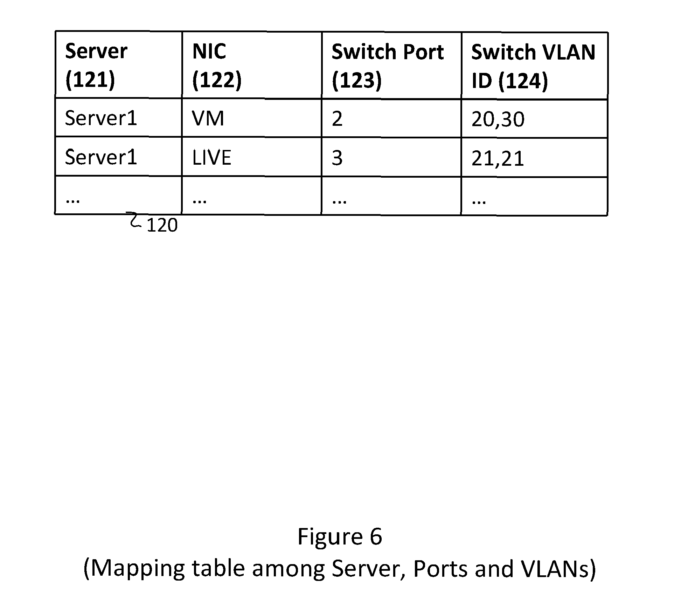

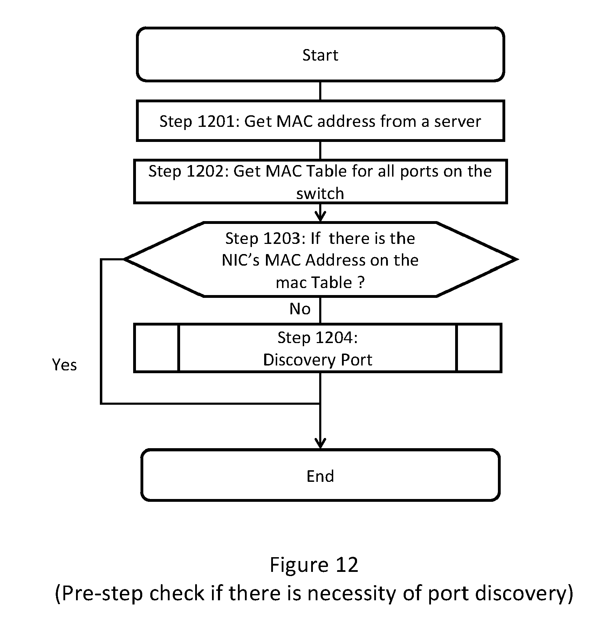

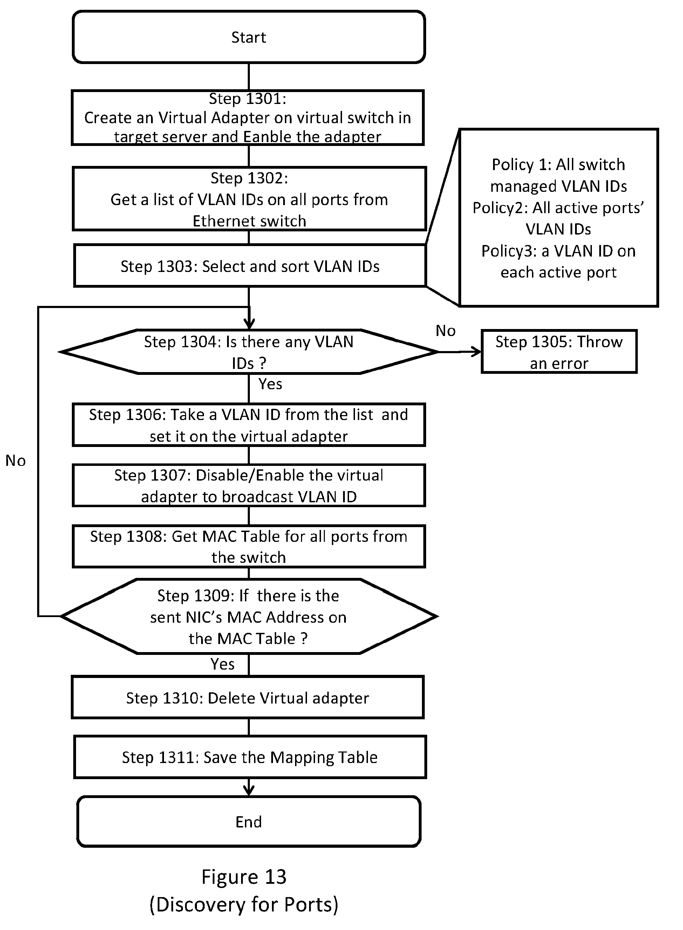

FIG. 6 shows an example of a Switch Port Mapping Table 120 among servers, ports, and VLANs. The table 120 includes columns of server name 121, physical NIC name 122 (same as NIC name 132 in FIG. 4), switch port number 123, and switch VLAN IDs 124. The port discovery 110 of the management server 100 constructs the table 120 based on the result of the Server MAC Address Table 130 of FIG. 4 and Discovered Server Connection Table 140 FIG. 5. The details are discussed in connection with the flow diagrams of FIGS. 12 and 13.

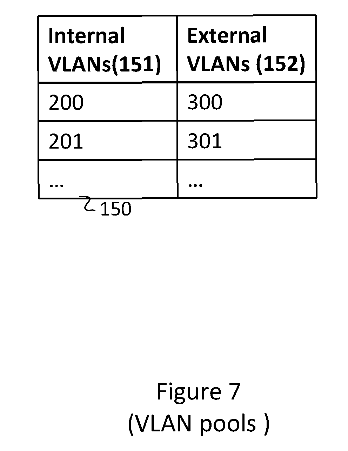

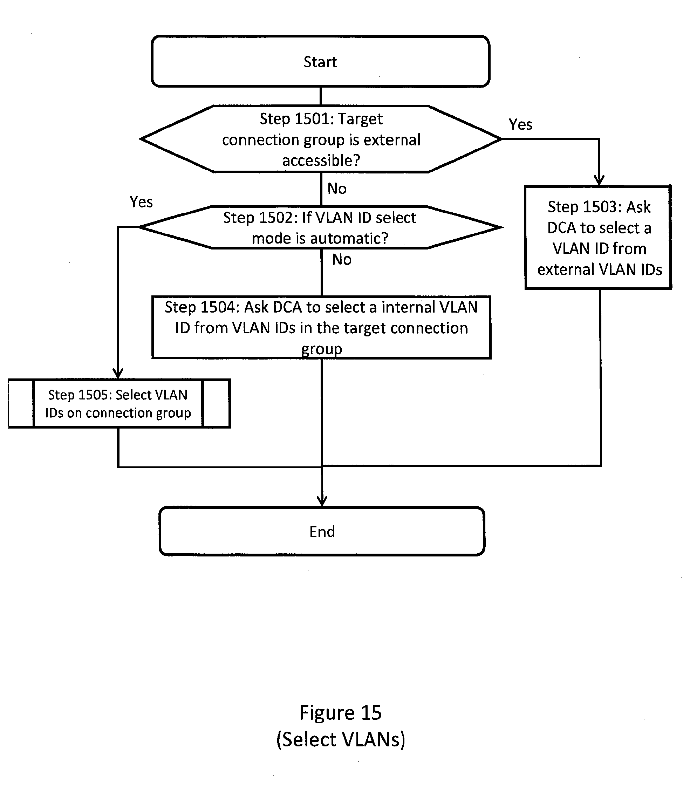

FIG. 7 shows an example of a VLAN IDs Pool Table 150. VLAN pools are used to assign new VLAN IDs after the port discovery 110 of the management server 100 finds a mapping between the NIC 101 of the management server 100 and the port of the server 300 to make a connection group by VLAN IDs. Regarding the pool, there are two types of VLAN pools. One type is for internal VLANs 151 and the other type is for external VLANs 152. Internal VLAN is for communication among the servers (100, 300) including management servers 100. External VLAN is for communicating with the external network 810 such as an intra-network or the Internet. Regarding Internal VLAN IDs, the DCA needs to prepare a pool of free VLAN ID which is not used in the switch 200. The VLAN ID may be produced by the port discovery 110 in automatic mode (see step 1502 in FIG. 15 and description thereof). Regarding external VLAN ID, the DCA may connect an external network on a port tagged by the external VLAN ID. The DCA also sets the usable VLAN IDs from GUI (Graphical User Interface) or CLI (Command Line Interface).

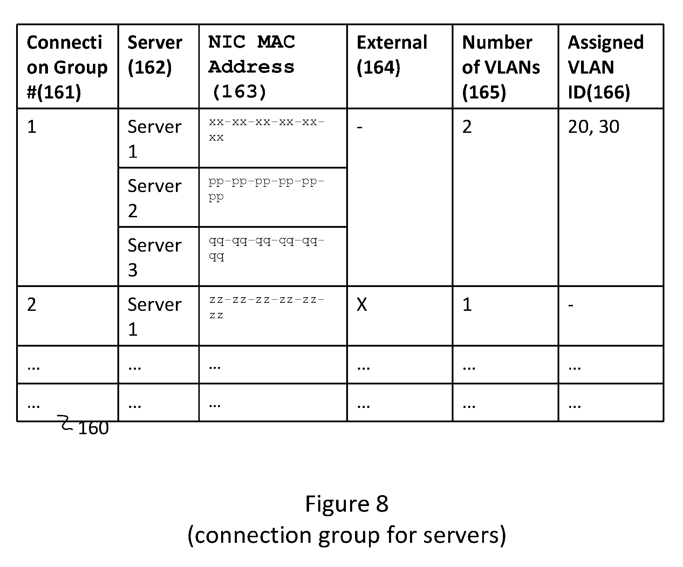

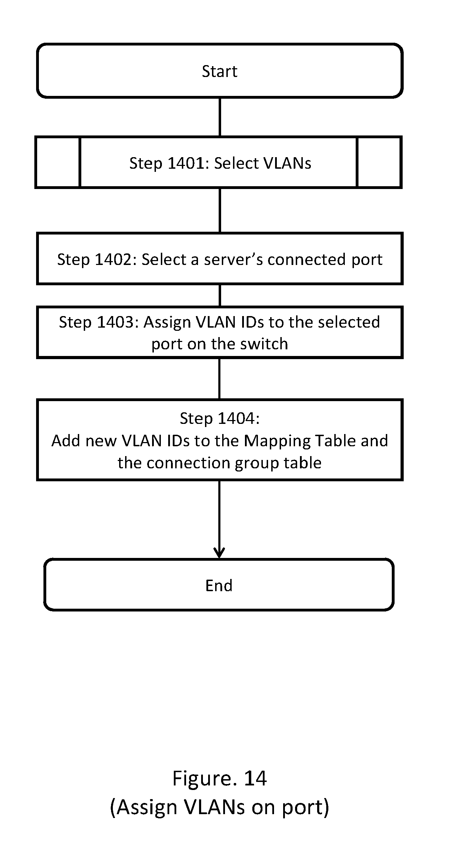

FIG. 8 shows an example of a Connection Group Table 160 for connection group on the switch's port 210 for the servers 300. The table 160 includes columns of connection group 161 as a unique identifier within a connection group, server name 162 in the connection group, NIC's MAC Address 163 for the server, external attribute 164 for the connection group, number of VLAN IDs 165 to assign for the connection group's VMs for a connection group running on VMs, and assigned VLAN IDs 166 (see FIG. 14 for description of the process of assigning VLAN IDs). Within this connection group, the server's NICs are to communicate with other servers. If the external attribute, the port discovery 110 should select an external network communicable VLAN ID which is defined in the external VLAN IDs pool 152 of FIG. 7.

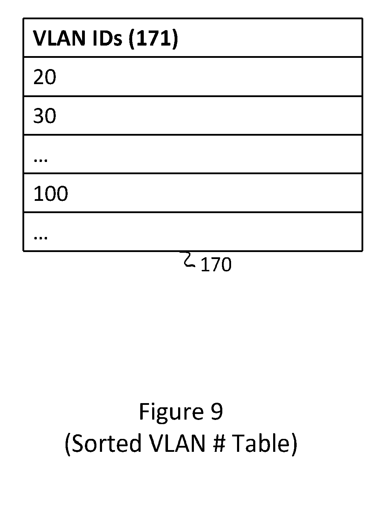

FIG. 9 shows an example of a Sorted VLAN IDs Table 170. The table 170 includes VLAN IDs (171) which are collected from the switch 200.

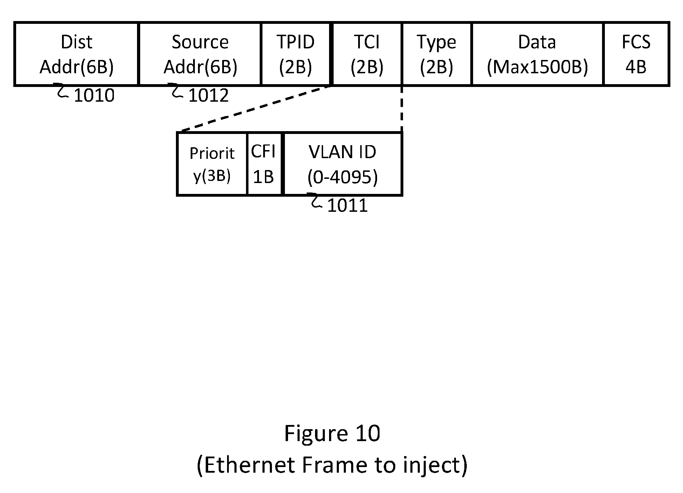

FIG. 10 shows an example of a frame format of Ethernet to access the VLAN network. The packet is based on Ethernet I or II frames. The packet includes destination address 1010 identifying the target of the server's NIC MAC Address, source address 1012 identifying source of the sender, and VLAN ID segment 1011. The main difference is that there is VLAN ID field 1011. When the switch receives the VLAN ID's packet on a port, the switch looks for the same VLAN ID on the other ports to send the received packet to those ports.

In specific embodiments of this invention, the DCA sets VLAN IDs pool 152 for external network access on a port which has external network access according to the VLAN IDs Pool Table 150 of FIG. 7 if the DCA wants to connect a connection group toward the external network (e.g., the Internet). The DCA also sets the connection groups for servers in the Connection Group Table 160 of FIG. 8. As illustrated in FIG. 8, the setting for the connection group is Server 162, NIC MAC Address 163 under the group, attribute of external network 164 to indicate the type of wanted network, number of VLAN IDs 165, and assigned VLAN ID 166.

The above system components, tables, and packet frame are used by the system to perform the following process flows.

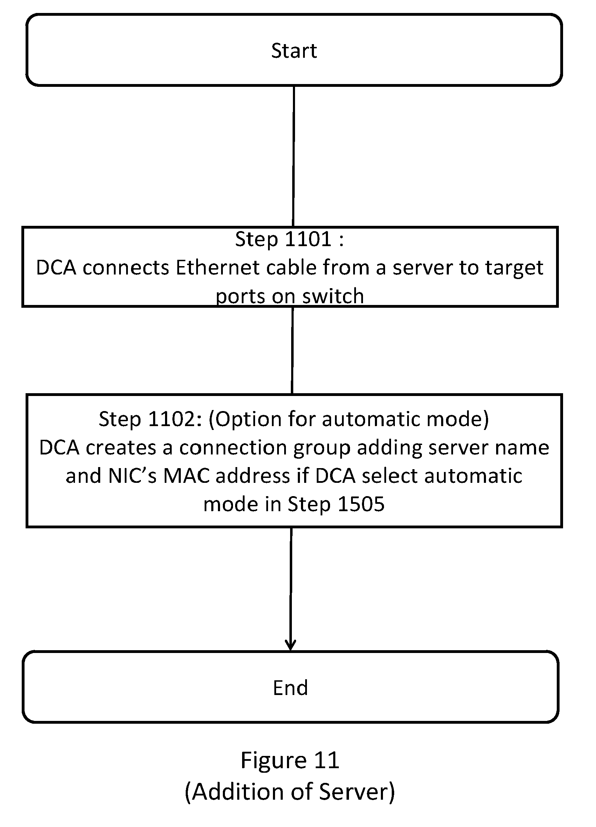

FIG. 11 shows an example of a flow diagram of a server addition operation procedure. In step 1101, the DCA connects Ethernet cable from the NICs of the servers 300 to target ports on the switch 200. In step 1102, the DCA adds server and NIC in a connection group. If there is no connection group, the DCA creates a new connection group adding the server name, NIC MAC address, attribute of external connection 164, and required number of VLAN IDs. Regarding this step, this step is used in the automatic mode described in step 1505 of FIG. 15 described below. If the DCA wants to perform the manual mode using step 1504 or step 1505, the DCA does not have to set this connection group.

After setting the server addition operation, the DCA initiates execution of port discovery flow and VLAN ID# setting flow on the port discovery 110 of the management server 100. The process of the port discovery 110 has two parts: pre-step (FIG. 12) and main step (FIG. 13). The port discovery 110 executes this process for all NICs to find the NIC and port mapping according to FIGS. 12 and 13.

FIG. 12 shows an example of a flow diagram illustrating a pre-step check on port discovery if there is a need for port discovery 110. In step 1201, the program for port discovery 110 gets the MAC address from a server node. In step 1202, the program gets the MAC address tables 130 for all ports from the switch 200 constructing the server 300 and the MAC address table 130 in FIG. 4. In step 1203, the program checks if there is the target NIC's MAC address on the collected MAC address tables 130. If there is not, the procedure goes to step 1204. If there is, the procedure ends on the ground or assumption that there is a connection between the servers 300 and the switch 200 in the access mode. In step 1204, the program executes the main port discovery flow of FIG. 13.

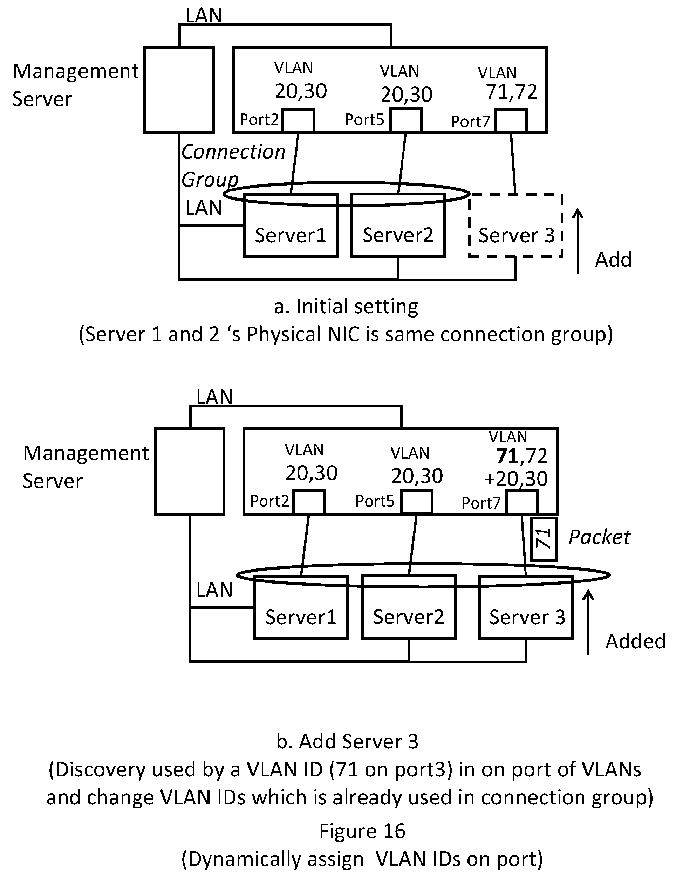

FIG. 13 shows an example of a flow diagram illustrating a main port discovery process for the discovery of ports executed on the port discovery module 110 of the management server 100. The process involves adding a server to be connected to the switch 200 (e.g., Server 3 in FIG. 16(a)). In step 1301, the program for port discovery 110 creates a virtual adapter 316 (see FIG. 2) on a virtual switch in the server/host to be added to the system, and enables the virtual adapter. As discussed below, the virtual adapter 316 is manipulated to send a packet with VLAN ID to discover the switch's port and the server's MAC address. In step 1302, the program gets the VLAN IDs on all ports from the switch 200. The list is based on the VLAN IDs 903 on the ports 901 in the Port Configuration Table of FIG. 3. In step 1303, the program selects the VLAN IDs based on the following policy and sorts the VLAN IDs based on the following methods. The DCA may need to select a discovery policy considering the merit and de-merit via GUI or CLI on management server. The sorted VLAN IDs 171 are stored in the Sorted VLAN IDs Table 170 of FIG. 9.

Policy 1 selects all VLAN IDs on switch and sorts them. (Not all range of VLAN. The switch managed VLAN IDs.) The merit of Policy 1 is that one does not miss any VLANs even if the switch has propriety operation for specific VLAN IDs. The demerit is that the processing time is the longest of the three policies. Policy 2 selects VLAN IDs on the switch's active port(s), which is (are) already connected by servers and the switch can find the connection(s) as active port(s), and aggregates the VLAN IDs by eliminating duplications. The merit of Policy 2 is that one checks only the active ports. The demerit is that one may miss VLAN IDs if the switch has propriety operation. Policy 3 selects one VLAN ID on the switch's active port(s). The merit of Policy 3 is that it is faster than Policy 2 because only a single VLAN ID is used to check the connection between the server's NIC and the switch's port. On the other hand, there is a higher likelihood of missing VLAN IDs under Policy 3.

In step 1304, the program checks if there are any VLAN IDs on the list. If there is, the procedure goes to step 1306. If there is not, the procedure goes to step 1305. In step 1305, the program sends an error message to the DCAs. The error message indicates that there is no VLAN ID or all ports are not used by trunk mode. In step 1306, the program takes a VLAN ID from the sorted list 171 in the Sorted VLAN IDs Table 170 of FIG. 9 and sets it on the virtual adapter of the server to be added. In step 1307, the program disables and enables the virtual adapter associated with the physical NIC that was assigned to the virtual adapter when it was created to broadcast the VLAN ID of step 1306, i.e., to send a packet with the VLAN ID to a switch's port, which is an attempt to find a target switch port by the management server (this step to manipulate the virtual adapter by disabling/enabling in order to broadcast the VLAN ID is implementation specific). An example of the Ethernet packet frame is shown in FIG.10. The VLAN ID is stored in the VLAN ID segment 1011. The program also sets the source of sender under the source address 1012. If the switch receives the packet with appropriate VLAN ID which is set on server connected port in the switch as trunk mode, the switch updates the Port Configuration Table 900 (see FIG. 3) to store the received MAC address 142 on the packet received port 143. If the switch receives the packet with incorrect VLAN ID which is not set on server connected port in that switch, the switch does not receive the packet. In step 1308, the program gets the Port Configuration Table 900 for all ports from the switch. In step 1309, the program confirms if there is the NIC's MAC address, is sent to the switch by the added server, on the Server Connection Table 140 (see FIG. 5), which is obtained from the switch 200 by the management server 100 in step 1307, i.e., whether the switch 200 accepted the packet from the NIC of the server to be added. If there is, the procedure goes to step 1310. In this time, the port discovery 110 finds a port, which has an entry of the send NIC's MAC address, based on the switch's Discovered Server Connection Table 140. If there is not, the procedure goes back to step 1304. In step 1310, the program deletes the virtual adapter. In step 1311, the program saves the discovered switch port 123 for the Server's target NIC (121, 122) on the Switch Port Mapping Table 120 of FIG. 6 based on then sent MAC address which is accepted by the switch based on the discovered VLAN ID.

The port discovery module 110 of the management server 100 directs or instructs the server to be added (e.g., Server 3 in FIG. 16(a)) to carry out steps 1301, 1307, and 1310, and performs the other steps in FIG. 13.

Having discovered the mapping, the port discovery 110 needs to set the VLAN ID to the discovered port which is connected to the target server's NIC.

FIG. 14 shows an example of a flow diagram illustrating a process of assigning VLAN IDs on the switch's port discovered by executing the port discovery module 110 of the management server 100. The process involves adding the target server to a connection group. In step 1401, the program for port discovery 110 selects the VLAN IDs for target port of the connection group (see FIG. 15 described below). In step 1402, the program selects the server's connected port based on the Switch Port Mapping Table 120 of FIG. 6 (which was updated in step 1311). In step 1403, the program assigns the selected VLAN IDs for the server to the selected port in the switch. In step 1404, the program adds the VLAN IDs selected in step 1401 to the switch VLAN IDs 124 in the Switch Port Mapping Table 120 of FIG. 6, as well as the assigned VLAN IDs 166 on the connection group of FIG. 8.

FIG. 15 shows an example of a flow diagram illustrating a process of selecting VLAN IDs as specified under in step 1402 of FIG. 14. The process is performed by execution on the port discovery module 110 of the management server 100. In step 1501, the program checks if the target server wants to connect an external network based on the external attribute 164 on the Connection Group Table 160 of FIG. 8. If yes, the procedure goes to step 1503. If no, the procedure goes to step 1502. In step 1503, the program requests the DCA to select VLAN IDs required by the number of VLAN IDs 165 in the Connection Group Table 160 of FIG. 8 from a list or pool of external VLANs 152 in the VLAN IDs Pool Table 150 of FIG. 7. The procedure ends. In step 1502, the program checks if the VLAN ID select mode is automatic. If no, the procedure goes to step 1504. If yes, the procedure goes to step 1505.

In step 1505 (automatic mode), the program selects VLAN IDs on the connection group. The procedure ends. In step 1504 (manual mode), the program requests the DCA to select an internal VLAN ID from a list of internal VLAN IDs in the target connection group (e.g., as provided in the internal VLAN pool 151 of FIG. 7). The number of VLAN IDs to select is defined by the Number of VLAN IDs 165 in the Connection Group Table 160 of FIG. 8.

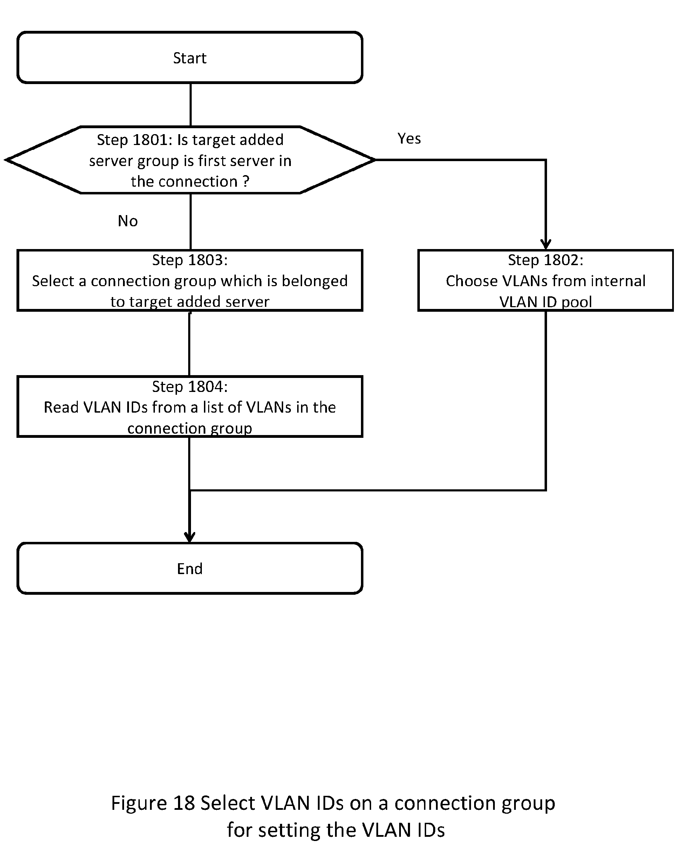

FIG. 18 shows an example of a flow diagram illustrating a process of selecting VLAN IDs on a connection group for setting the VLAN IDs automatically in step 1505 of FIG. 15. The process is executed in the port discovery module 110. In step 1801, the program checks if the target added server is the first server in the connection group. If the added server is the first, the procedure goes to step 1802. If the added server is not the first, the procedure goes to step 1803. In step 1802, the program chooses VLAN IDs from the internal VLAN ID pool 151 in FIG. 7. The number of VLAN IDs is defined in the Number of VLANs 165 of the connection group table160 in FIG. 8. In step 1803, the program selects a connection group, to which the added server belongs, from the connection group table 160 in FIG. 8. In step 1804, the program reads VLAN IDs from a list of VLANs in the connection group. The procedure ends.

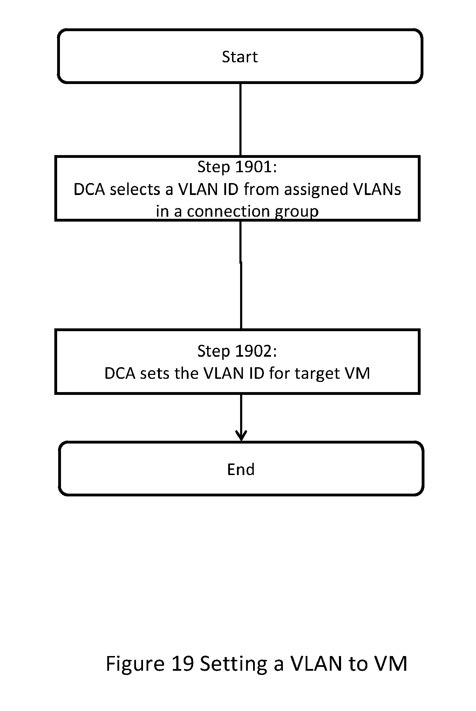

FIG. 19 shows an example of a flow diagram illustrating a process of setting VLAN IDs to each VM on creation of the VM. In step 1901, the DCA selects a VLAN ID from the assigned VLAN IDs on the target connection group using the connection group list in FIG. 8. In step 1902, the DCA sets the VLAN ID for the target VM.

Using the above embodiment, one can execute the above-described processes to achieve the configurations shown in FIG. 16. FIG. 16 illustrates an example of a procedure to assign VLAN IDs on each switch port. More specifically, FIG. 16(a) shows a system configuration after adding a server for connection to a switch port but before setting the new VLAN ID. FIG. 16(b) shows a system configuration after setting the new VLAN ID for the added server to join a connection group. The system includes a switch, a management server, and two servers. The servers connect to ports of the switch and each port has associated VLAN IDs.

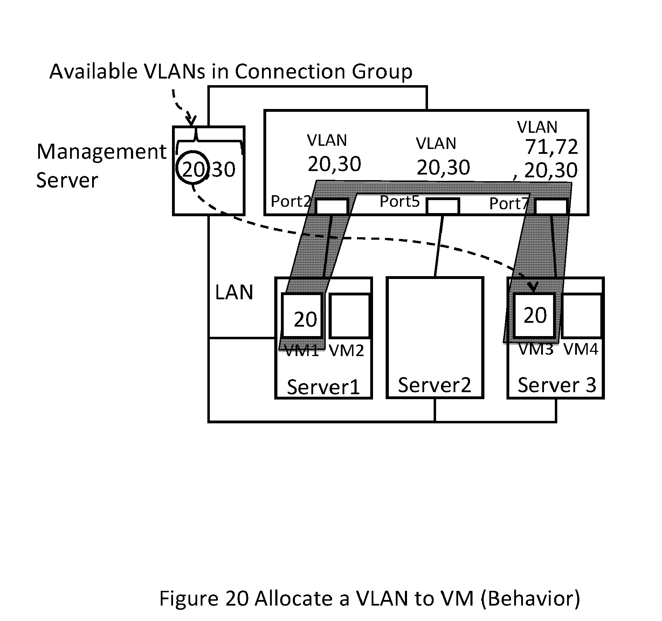

For example, Server 1 connects to port 2 of the switch and that switch port sets VLAN IDs 20 and 30. Server 2 connects to port 5 of the switch and that switch port sets VLAN IDs 20 and 30. Server 1 and server 2 are within the same connection group. The DCA has set VLAN IDs 71 and 72 on port 7. When the DCA adds server 3 on port 7, the management server collects a list of VLAN IDs in each port as a unit of VLANs group, and picks a first VLAN ID (20 on port1, 20 on port 2, 71 on port 7) to discover VLAN IDs on the port and removes duplication of VLAD IDs such as 20, 71 under Policy 3 as discussed above. The management server directs server 3 to send packets with the VLAN IDs 20, 71 and checks which port on the switch receive the packet sent by server 3. As shown in FIG. 20 and discussed below, the management server constructs the switch port and server's NIC mapping as presented in the form of the switch port mapping table 120 of FIG. 6. Regarding the Switch VLAN ID 124, the port discovery module 110 sets/assigns the VLAN IDs based on the connection group's VLAN IDs. In this example, the connection group has VLAN IDs 20, 30, and the port discovery module sets the VLAN IDs 20, 30 on the discovered port 7.

In this embodiment, we do not discuss the procedure of checking the connection group after setting the VLAN IDs. However, one may send packets among the servers in the connection group to verify the links.

FIG. 20 shows an example of a system configuration illustrating the allocation of a VLAN ID to each VM after adding a server to a connection group. In this example, the connection group has VLAN IDs 20, 30. The DCA assigns one of the VLAN IDs to a VM of the added server 3. That VM has a virtual NIC to communicate with other VMs via the physical NIC of the VM's local server. For example, the DCA assigns VLAN ID 20 to the virtual NIC of VM3 on server 3. After that, VM1 of server 1, which has VLAN ID 20, can communicate with VM3 on server 3 using VLAN ID 20.

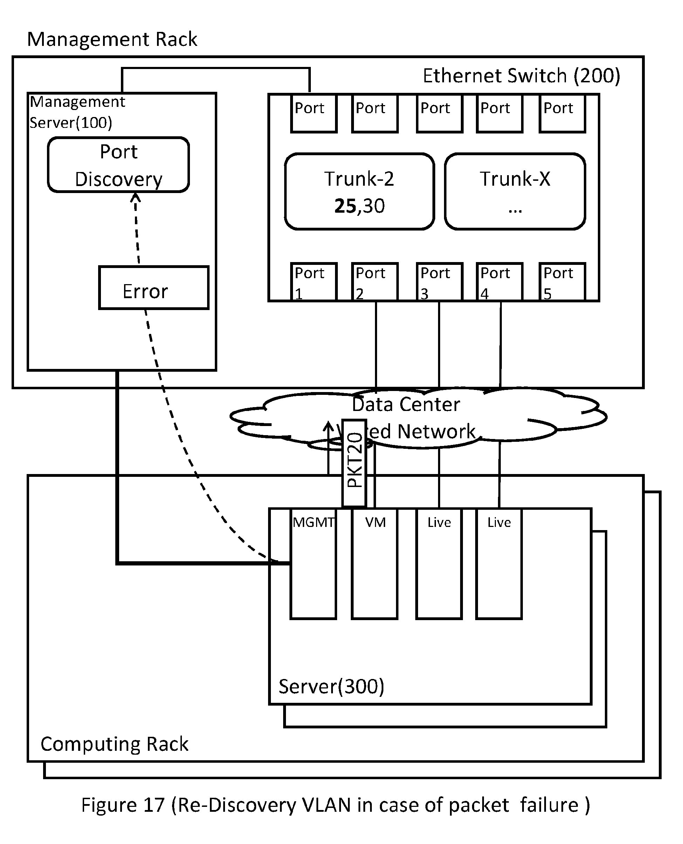

As another timing of re-discovery of VLAN, there is a situation of the packet failure case. FIG. 17 shows a logical configuration of re-discovery of a mapping between a server's MAC and a switch port in case of failure of sending a packet. If the DCA changes the switch VLAN setting on a port from 20 to 30, and the server sends a packet with 20 VLAN ID, the packet is dropped because the switch prohibits sending the packet because the VLAN ID is incorrect. The management server receives an error message which is sent by the server using mail, SNMP (Simple Network Management Protocol), SNMP's trap, system event log, or some other kind of notification method and executes re-discovery on the server having packet sent failure. The procedure is illustrated in FIG. 13.

According to embodiments of the invention, the connection between the server's NIC and the switch port on server can be kept even if the DCA fails to set up the VLAN ID or there is a failure of Ethernet cabling.

Of course, the system configurations illustrated in FIG. 1 is purely exemplary of information systems in which the present invention may be implemented, and the invention is not limited to a particular hardware configuration. The computers and storage systems implementing the invention can also have known I/O devices (e.g., CD and DVD drives, floppy disk drives, hard drives, etc.) which can store and read the modules, programs and data structures used to implement the above-described invention. These modules, programs and data structures can be encoded on such computer-readable media. For example, the data structures of the invention can be stored on computer-readable media independently of one or more computer-readable media on which reside the programs used in the invention. The components of the system can be interconnected by any form or medium of digital data communication, e.g., a communication network. Examples of communication networks include local area networks, wide area networks, e.g., the Internet, wireless networks, storage area networks, and the like.

In the description, numerous details are set forth for purposes of explanation in order to provide a thorough understanding of the present invention. However, it will be apparent to one skilled in the art that not all of these specific details are required in order to practice the present invention. It is also noted that the invention may be described as a process, which is usually depicted as a flowchart, a flow diagram, a structure diagram, or a block diagram. Although a flowchart may describe the operations as a sequential process, many of the operations can be performed in parallel or concurrently. In addition, the order of the operations may be re-arranged.

As is known in the art, the operations described above can be performed by hardware, software, or some combination of software and hardware. Various aspects of embodiments of the invention may be implemented using circuits and logic devices (hardware), while other aspects may be implemented using instructions stored on a machine-readable medium (software), which if executed by a processor, would cause the processor to perform a method to carry out embodiments of the invention. Furthermore, some embodiments of the invention may be performed solely in hardware, whereas other embodiments may be performed solely in software. Moreover, the various functions described can be performed in a single unit, or can be spread across a number of components in any number of ways. When performed by software, the methods may be executed by a processor, such as a general purpose computer, based on instructions stored on a computer-readable medium. If desired, the instructions can be stored on the medium in a compressed and/or encrypted format.

From the foregoing, it will be apparent that the invention provides methods, apparatuses and programs stored on computer readable media for configuring dynamically switches and servers with VLAN in a cloud datacenter. Additionally, while specific embodiments have been illustrated and described in this specification, those of ordinary skill in the art appreciate that any arrangement that is calculated to achieve the same purpose may be substituted for the specific embodiments disclosed. This disclosure is intended to cover any and all adaptations or variations of the present invention, and it is to be understood that the terms used in the following claims should not be construed to limit the invention to the specific embodiments disclosed in the specification. Rather, the scope of the invention is to be determined entirely by the following claims, which are to be construed in accordance with the established doctrines of claim interpretation, along with the full range of equivalents to which such claims are entitled.

## Claims

1. A management computer for managing configuration of a plurality of servers for connection to a switch, the management computer comprising a processor, a memory, and a port discovery module, the port discovery module being configured to:
(i) instruct a target server of the plurality of servers, to be connected to a target switch port of the switch, to create a virtual adapter on a virtual switch associated with a physical NIC (Network Interface Card) in the target server;
(ii) obtain a list of VLAN IDs (Virtual Local Area Network Identifiers) on all switch ports of the switch;
(iii) select one or more VLAN IDs from the list based on a preset policy;
(iv) set one VLAN ID from the selected one or more VLAN IDs onto the virtual adapter;
(v) instruct the target server to manipulate the virtual adapter so as to send a packet with the set VLAN ID from the target server to the target switch port of the switch;
(vi) obtain a server MAC (Machine Address Control) address table for all switch ports of the switch, the server MAC address table providing information on physical NICs and corresponding MAC addresses for each server connected to the switch;
(vii) if the switch accepted the packet sent to the target switch port based on the set VLAN ID to the target switch port and an updated MAC address for the target switch port in a port configuration table of the switch, the port configuration table including a MAC address list of MAC address and corresponding VLAN IDs for each switch port on the switch, the updated MAC address being one of the MAC addresses on the MAC address list for the target switch port, then update a switch port mapping using the updated MAC address and the target switch port to map the physical NIC associated with the virtual adapter of the target server to the target switch port having the discovered VLAN ID;
(viii) if the switch did not accept the packet sent to the target switch port, and if the packet's MAC address of the target server's NIC is on the port configuration table of the switch, then set a next VLAN ID onto the virtual adapter and instruct the target server to manipulate the virtual adapter so as to send a packet with the set next VLAN ID from the target server to the target switch port of the switch; and
(ix) repeat (vi) to (viii) until the packet's MAC address of the target server's NIC is accepted by the switch based on the discovered VLAN ID or there is no more next VLAN ID on the list.

2. The management computer of claim 1,
wherein updating the switch port mapping comprises updating a switch port mapping table which includes server name of each server connected to the switch, physical NIC name of each physical NIC of the server connected to the switch, switch port number of the switch port connected to the physical NIC, and switch VLAN IDs of the switch port connected to the physical NIC.

3. The management computer of claim 1 or 2, wherein the one or more VLAN IDs are selected from the list based on one of the following preset policies:
(1) selecting all VLAN IDs on the switch;
(2) selecting VLAN IDs on only active ports of the switch which are connected to the servers; and
(3) selecting one VLAN ID on any of active ports of the switch which are connected to the servers.

4. The management computer of at least one of claims 1 to 3,
wherein the port discovery module is configured, if the switch did not accept the packet sent to the target switch port, and if there is no more next VLAN ID on the list, then send an error message to indicate that there is no discovered VLAN ID.

5. The management computer of at least one of claims 1 to 4, wherein the port discovery module is configured, if the switch accepted the packet sent to the target switch port so as to produce a discovered VLAN ID, to add the target server to a connection group of servers, which comprises:
selecting one or more VLAN IDs for the connection group; and
assigning the selected VLAN IDs to the target switch port which is connected to the physical NIC in the target server.

6. The management computer of claim 5,
wherein the port discovery module is configured to update a connection group table using the VLAN IDs assigned to the target switch port connected to the physical NIC in the target server with the corresponding MAC address, the connection group table including, for each connection group, the servers in the connection group, the corresponding server MAC address of the physical NIC, the assigned VLAN IDs, and whether the connection group is for connection to an external network or not.

7. The management computer of claim 6, wherein selecting one or more VLAN IDs for the connection group comprises:
if the connection group is for connection to an external network, then requesting an administrator to select one or more external VLAN IDs for the connection group from the connection group table;
if the connection group is not for connection to an external network and selection is not automatic, then requesting an administrator to select one or more internal VLAN IDs for the connection group from the connection group table; and
if the connection group is not for connection to an external network and selection is automatic, then automatically selecting one or more internal VLAN IDs for the connection group from the connection group table.

8. A method for managing configuration of a plurality of servers for connection to a switch, the method comprising:
(i) instructing a target server of the plurality of servers, to be connected to a target switch port of the switch, to create a virtual adapter on a virtual switch associated with a physical NIC (Network Interface Card) in the target server;
(ii) obtaining a list of VLAN IDs (Virtual Local Area Network Identifiers) on all switch ports of the switch;
(iii) selecting one or more VLAN IDs from the list based on a preset policy;
(iv) setting one VLAN ID from the selected one or more VLAN IDs onto the virtual adapter;
(v) instructing the target server to manipulate the virtual adapter so as to send a packet with the set VLAN ID from the target server to the target switch port of the switch;
(vi) obtaining a server MAC (Machine Address Control) address table for all switch ports of the switch, the server MAC address table providing information on physical NICs and corresponding MAC addresses for each server connected to the switch;
(vii) if the switch accepted the packet sent to the target switch port based on the set VLAN ID to the target switch port and an updated MAC address for the target switch port in a port configuration table of the switch, the port configuration table including a MAC address list of MAC address and corresponding VLAN IDs for each switch port on the switch, the updated MAC address being one of the MAC addresses on the MAC address list for the target switch port, then updating a switch port mapping using the updated MAC address and the target switch port to map the physical NIC associated with the virtual adapter of the target server to the target switch port having the discovered VLAN ID;
(viii) if the switch did not accept the packet sent to the target switch port, and if the packet's MAC address of the target server's NIC is on the port configuration table of the switch, then setting a next VLAN ID onto the virtual adapter and instruct the target server to manipulate the virtual adapter so as to send a packet with the set next VLAN ID from the target server to the target switch port of the switch; and
(ix) repeating (vi) to (viii) until the packet's MAC address of the target server's NIC is accepted by the switch based on the discovered VLAN ID or there is no more next VLAN ID on the list.

9. The method of claim 8,
wherein updating the switch port mapping comprises updating a switch port mapping table which includes server name of each server connected to the switch, physical NIC name of each physical NIC of the server connected to the switch, switch port number of the switch port connected to the physical NIC, and switch VLAN IDs of the switch port connected to the physical NIC.

10. The method of claim 8 or 9, wherein the one or more VLAN IDs are selected from the list based on one of the following preset policies:
(1) selecting all VLAN IDs on the switch;
(2) selecting VLAN IDs on only active ports of the switch which are connected to the servers; and
(3) selecting one VLAN ID on any of active ports of the switch which are connected to the servers.

11. The method of at least one of claims 8 to 10, further comprising:
if the switch did not accept the packet sent to the target switch port, and if there is no more next VLAN ID on the list, then sending an error message to indicate that there is no discovered VLAN ID.

12. The method of at least one of claims 8 to 11, further comprising, if the switch accepted the packet sent to the target switch port so as to produce a discovered VLAN ID, adding the target server to a connection group of servers, which includes:
selecting one or more VLAN IDs for the connection group; and
assigning the selected VLAN IDs to the target switch port which is connected to the physical NIC in the target server.

13. The method of claim 12, further comprising:
updating a connection group table using the VLAN IDs assigned to the target switch port connected to the physical NIC in the target server with the corresponding MAC address, the connection group table including, for each connection group, the servers in the connection group, the corresponding server MAC address of the physical NIC, the assigned VLAN IDs, and whether the connection group is for connection to an external network or not.

14. The method of claim 13, wherein selecting one or more VLAN IDs for the connection group comprises:
if the connection group is for connection to an external network, then requesting an administrator to select one or more external VLAN IDs for the connection group from the connection group table;
if the connection group is not for connection to an external network and selection is not automatic, then requesting an administrator to select one or more internal VLAN IDs for the connection group from the connection group table; and
if the connection group is not for connection to an external network and selection is automatic, then automatically selecting one or more internal VLAN IDs for the connection group from the connection group table.
